# EUROPÄISCHE PATENTSCHRIFT

(11) **EP 2 203 324 B1**
(45) Veröffentlichungstag und Bekanntmachung des Hinweises auf die Patenterteilung: **21.03.2012**
(21) Anmeldenummer: 08786555.6
(22) Anmeldetag: 29.07.2008
(51) Int. Cl.: B60J 5/06, E05B 65/08

(54) **SCHIEBETÜRMODUL FÜR EINE KRAFTFAHRZEUGTÜR**
SLIDING DOOR MODULE FOR A MOTOR VEHICLE DOOR
MODULE DE PORTE COULISSANTE POUR UNE PORTE DE VÉHICULE AUTOMOBILE

(30) Priorität: 19.10.2007 DE 102007000543
(43) Veröffentlichungstag der Anmeldung: 07.07.2010
(73) Patentinhaber: Faurecia Innenraum Systeme GmbH, 76767 Hagenbach (DE)
(72) Erfinder: BOECKER, Frank, 58089 Hagen (DE)
(74) Vertreter: Richardt Patentanwälte
(86) Internationale Anmeldenummer: PCT/EP2008/059917
(87) Internationale Veröffentlichungsnummer: WO 2009/053126

(56) Entgegenhaltungen:
- DE-A1- 2 263 421
- DE-A1-102004 018 444
- DE-A1-102004 058 870
- DE-U1-202005 015 870

## Beschreibung

Die Erfindung betrifft ein Schiebetürmodul für eine Schiebetür eines Kraftfahrzeugs und ein Verfahren zur Montage eines Schiebetürmoduls für eine Schiebetür eines Kraftfahrzeugs.

Türmodule werden allgemein heutzutage dazu verwendet, um die Montage von technischen Elementen wie zum Beispiel Fensterhebern, Lautsprechern, elektrischen Schaltern usw. an einer Kraftfahrzeugtür zu vereinfachen. Dies gilt auch für Schiebetürmodule, welche in diesem Fall an einer Schiebetüre eines Kraftfahrzeugs montiert werden. Beispielsweise werden die oben genannten technischen Elemente auf einem separaten Schiebetürmodul angebracht, um anschließend zusammen mit dem Modul in einer in der Fahrzeugtür vorhandenen Öffnung eingesetzt zu werden. Damit vereinfacht sich die Montage der besagten technischen Komponenten in einer Kraftfahrzeugtür erheblich.

Wünschenswert ist es dabei auch, zum Beispiel das Schlossmodule der Kraftfahrzeugtür so auf dem Türmodul unterzubringen, dass auch bezüglich der Montage des Schlossmoduls an der Kraftfahrzeugtür eine vereinfachte Vorgehensweise möglich ist. Problematisch gestaltet sich dabei jedoch, dass das Schlossmodul in seiner Funktionsposition üblicherweise über den Rand des Türmoduls hinausragt. Dieses Hinausragen ist notwendig, damit die am Schlossmodul befindliche Schloss- oder Drehfalle bündig mit der Stirnseite der Kraftfahrzeugtür abschließt. Dies erfordert jedoch ein kompliziertes Einfädeln des oder der überhängenden Schlossmodule in die Öffnung der Kraftfahrzeugtür beim Aufsetzen des Schiebetürmoduls auf die besagte Öffnung. Dies wird insbesondere bei Schiebetürmodulen noch weiter verkompliziert, da bei einer Schiebetür auf beiden Stirnseiten der Schiebetüre überhängende Schlossmodule vorhanden sind. Um dieses Problem zu lösen, schlägt zum Beispiel die DE 20 2005 015 870 U1 ein Schiebetürmodul für eine Schiebetür eines Kraftfahrzeugs vor, bei dem mindestens eine Baugruppe des Schließsystems zunächst in einer Parkposition am Aggregateträger arretierbar ist und danach nach erfolgtem Einbau des Aggregateträgers aus ihrer Parkposition in ihre Funktionsposition überführt werden zu können. Weitere alternative Montageverfahren sind durch die DE 10 2004 018 444 A1 und DE 10 2004 058 870 A1 bekannt.

DE 2 263 421 offenbart eine Schlossanordnung für eine Schiebetür, insbesondere eines Kraftfahrzeugs, wobei an der Schiebetür zwei Schließelemente voneinander beabstandet angeordnet sind, wobei die beiden Schließelemente über zwei Betätigungsstangen miteinander verbunden sind, wobei die beiden Betätigungsstangen um einen in einer Schwenkachse verschwenkbaren Hebel gelenkig miteinander verbunden sind.

DE 1 178 721 offenbart eine Anordnung der Türverriegelung bei Kraftfahrzeugen, deren Karosserie aus mehreren durch Fugen getrennten Teilen besteht, wobei mindestens zwei benachbarte Außenkarosserieteile durch am Tragwerk befestigte Aufnahmeteile fixiert, gelagert und/oder befestigt sind.

DE 196 44 155 A1 offenbart eine Kraftfahrzeugtür mit Türaußenblech, Türinnenblech, Innenverkleidung und Bauteilträger für das Türschloss sowie für andere Funktionselemente. Das Türschloss weist einen etwa waagerechten Einstellfreiheitsgrad auf, wobei das Türschloss im montierten Zustand mit einem Überstand über den schlossseitigen Rand des in die Kraftfahrzeugtür eingesetzten Bauteilträgers vorsteht.

Der Erfindung liegt demgegenüber die Aufgabe zugrunde, ein verbessertes Schiebetürmodul für eine Schiebetür eines Kraftfahrzeugs, eine verbesserte Schiebetür und ein verbessertes Verfahren zur Montage eines Schiebetürmoduls für eine Schiebetür eines Kraftfahrzeugs zu schaffen, mit welchen der Montagevorgang bezüglich verschiebbarer Schlossmodule und Betätigungselementen vereinfacht werden kann.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Schiebetürmodul für eine Schiebetür eines Kraftfahrzeugs geschaffen mit einem ersten Schlossmodul, wobei das erste Schlossmodul in einer ersten Montageposition nicht über einen ersten äußeren Rand des Schiebetürmoduls hinausragt, wobei das erste Schlossmodul zur Überführung in eine erste Funktionsposition ausgebildet ist, wobei das erste Schlossmodul in der ersten Funktionsposition über den ersten Rand des Schiebetürmoduls hinausragt. Ferner umfasst das erfindungsgemäße Schiebetürmodul ein zweites Schlossmodul, wobei das zweite Schlossmodul in einer zweiten Montageposition nicht über einen zweiten äußeren Rand des Schiebetürmoduls hinausragt, wobei das zweite Schlossmodul zur Überführung in eine zweite Funktionsposition ausgebildet ist, wobei das erste Schlossmodul in der zweiten Funktionsposition über den äußeren Rand des Schiebetürmoduls hinausragt und wobei der erste äußere Rand vom zweiten äußeren Rand räumlich beabstandet ist. Ferner umfasst das Schiebetürmodul zumindest zwei erste Betätigungsstangen zur Übertragung einer Betätigungskraft von dem ersten Schlossmodul zu dem zweiten Schlossmodul, wobei die Betätigungsstangen aus Kunststoff bestehen, wobei die beiden ersten Betätigungsstangen jeweils mit dem ersten und zweiten Schlossmodul und einem um eine Schwenkachse in y-Richtung verschwenkbaren Hebel gelenkig verbunden sind. Ferner umfasst das Schiebetürmodul eine dritte Betätigungsstange zur Übertragung einer Betätigungskraft von dem ersten oder zweiten Schlossmodul zu einem Betätigungselement, wobei es sich bei dem Betätigungselement um eine Türschloss-Außenbetätigung und/oder eine Türschloss-Innenbetätigung und/oder eine Türschloss-Innensicherung handelt, wobei die dritte Betätigungsstange (300) aus Kunststoff ausgebildet ist, wobei die dritte Betätigungsstange durch eine erste und eine zweite Schiene ausgebildet ist und ein Verbindungselement zur Verbindung der ersten und zweiten Schienen miteinander und Mittel zum Verrasten der ersten und zweiten Schiene in der Funktionsposition des ersten und/oder zweiten Schlossmoduls aufweist.

Das erfindungsgemäße Schiebetürmodul hat den Vorteil, dass in einfacher und kostengünstiger Weise Betätigungselemente so gestaltet werden können, dass bei der Überführung der Schlossmodule von der Montage- in die Funktionsposition die Betätigungselemente wie z.B. eine Betätigungsstange sich selbständig den neuen geometrischen Verhältnissen anpasst. Dies bedeutet, dass sich die Betätigungsstange bezüglich ihrer geometrischen Lage als auch ihrer Länge durch entsprechende Verbindungselemente an die räumliche Position des Schlossmoduls anpasst. Dies ist insbesondere deshalb relevant, da ja bei einem Schiebetürmodul zur Montage des Moduls in einer dazu vorgesehenen Öffnung der Kraftfahrzeugtür gleich zwei Schlossmodule gemeinsam von der Montage- in die Funktionsposition überführt werden müssen. Dies bedeutet aber, dass bei der Überführung in die Funktionsposition das erste und das zweite Schlossmodul jeweils hin zur Stirnseite der Kraftfahrzeugtür in einander entgegengesetzte Richtungen bewegt werden müssen. Durch eine Betätigungsstange, die sich dabei selbständig den neuen geometrischen Verhältnissen anpasst, wird eine solch gleichzeitig geometrische Überführung der beiden Schlossmodule von der Montage- in die Funktionsposition möglich. Durch die Ausbildung der Betätigungsstange aus Kunststoff lassen sich zur Anpassung an die räumlichen Verhältnisse wie Abwinkelung, Länge etc. notwendige mechanische Komponenten kostengünstig herstellen, da diese zum Teil einstückig mit der Betätigungsstange bereits hergestellt werden können.

Ferner hat eine Betätigungsstange aus Kunststoff den Vorteil, dass eine solche als Kunststoffspritzgussteil hergestellt werden kann, was eine Variation des Querschnitts ermöglicht, wobei der Querschnittsverlauf je nach den Anforderungen optimiert werden kann. Funktionselemente und Betätigungsstange, wie zum Beispiel ein Verschiebeschutz, Verstärkungsrippen, das Betätigungselement selbst und Befestigungselemente, wie zum Beispiel Befestigungsclips und dergleichen, können als integraler Bestandteil der Betätigungsstange durch Kunststoffspritzguss hergestellt werden. Die Herstellung der Betätigungsstange mittels Kunststoffspritzguss erlaubt auch die Herstellung komplizierter Geometrien mit hoher Genauigkeit.

Ferner können Betätigungsstangen aus Kunststoff nicht korrodieren, sodass ein Korrosionsschutz, wie er für übliche Betätigungsstangen aus Stahl erforderlich ist, entfällt. In diesem Zusammenhang sei darauf hingewiesen, dass insbesondere Betätigungsstangen zur Übertragung einer Betätigungskraft zu Betätigungselementen, welche sich auf der Nassseite des Türmoduls befinden, großen Temperaturschwankungen und auch Feuchtigkeit ausgesetzt sind. Daher ist ein Korrosionsschutz für übliche Betätigungsstangen aus Stahl, wie aus dem Stand der Technik bekannt, unabdinglich.

Ferner haben Betätigungsstangen aus Kunststoff den Vorteil, dass Klappergeräusche, wie sie für übliche Betätigungsstangen aus Stahl bekannt sind, schon durch geeignete Materialwahl für entsprechende Betätigungsstangen reduziert oder gar vermieden werden können. Dämpfungsgummis zur Geräuschvermeidung, Durchführungstüllen, Geräuschdämpfungsschläuche und dergleichen können an die Betätigungsstange angespritzt werden.

Ein weiterer Vorteil von Betätigungsstangen aus Kunststoff ist die Gewichtsreduzierung.

Ein zusätzlicher weiterer Vorteil ist die Möglichkeit, dass Betätigungsstangen aus Kunststoff bei der Herstellung von Kunststofftürmodulen zusammen mit diesen hergestellt werden können. Dies kann bei der Herstellung so realisiert sein, dass die Kunststoffstangen über dünne Stege einstückig mit dem Kunststofftürmodul hergestellt werden. Dadurch können diese Betätigungsstangen durch eine einfache Knick- oder Zugbewegung vom Türmodul abgebrochen entfernt werden, um daraufhin in entsprechende Aufnahmen der Schlossmodule eingesetzt zu werden. Dies hat zur Folge, dass ein weiterer Arbeitsschritt zur Herstellung von Betätigungsstangen durch dieses Verfahren vermieden werden kann. Eine Einhängung der so hergestellten Kunststoff-Betätigungsstangen in die Schlossmodule ist ohnehin unabdingbar, da die Schlossmodule aufgrund deren Materialwahl unabhängig und damit nicht einstückig von den Kunststoff-Betätigungsstangen hergestellt werden können.

Nach einer Ausführungsform der Erfindung umfasst das Schiebetürmodul ferner eine Türfeststellung, wobei die Türfeststellung im Wesentlichen senkrecht über eine zweite Betätigungsstange zur Übertragung einer Betätigungskraft mit dem zweiten Schlossmodul verbunden ist, wobei die zweite Betätigungsstange ebenfalls aus Kunststoff besteht.

Dadurch, dass die Türfeststellung über die zweite Betätigungsstange aus Kunststoff mit dem zweiten Schlossmodul verbunden ist, ergeben sich dieselben Vorteile bezüglich Gewichtsreduzierung, Verhindern von Klappergeräuschen, Korrosionsvermeidung usw. wie bereits oben angesprochen.

Nach einer Ausführungsform der Erfindung ist die Türfeststellung an der Türunterkante der Schiebetür angeordnet. Nach einer weiteren Ausführungsform der Erfindung umfasst das Schiebetürmodul ferner ein erstes Rastelement, wobei das erste Rastelement zur Fixierung des ersten Schlossmoduls in der ersten Montageposition und/oder in der ersten Funktionsposition ausgebildet ist. Ferner umfasst das Schiebetürmodul ein zweites Rastelement, wobei das zweite Rastelement zur Fixierung des zweiten Schlossmoduls in der zweiten Montageposition und/oder in der zweiten Funktionsposition ausgebildet ist. Ein solches Rastelement hat dabei den Vorteil, dass in der Montageposition die Schlossmodule zwar fixiert sind, jedoch durch einen geringen Kraftaufwand in ihre Funktionsposition überführbar sind und dort durch die Rastelemente selbständig insoweit gehaltert werden, als dass eine einfache Fixierung mittels entsprechender Befestigungsmittel an der Schiebetür möglich ist.

Nach einer Ausführungsform der Erfindung ist das Rastelement stangenförmig. Dabei weist vorzugsweise das Rastelement eine Vielzahl von Rastpositionen auf. Dies hat den Vorteil, dass Türmodule universell für verschiedene Typen von Kraftfahrzeugtüren mit verschiedenen Türdimensionen verwendet werden können. Zwar ist in diesem Fall vorzugsweise die Montageposition der Schlossmodule am Schiebetürmodul immer dieselbe, jedoch kann der Abstand der Stirnseiten der Kraftfahrzeugtür, mit welcher die Schlossfallen der Schlossmodule in der Funktionsposition bündig abschließen müssen, unterschiedlich weit von der Montageposition der Schlossfallen der Schlossmodule entfernt sein. In diesem Fall ist es aufgrund des Vorhandenseins der Vielzahl von Rastpositionen möglich, in einem beliebigen Abstand der Schlossfalle von der ursprünglichen Montageposition eine provisorische Fixierung der Schlossmodule über die Rastelemente am Türmodul zu erzielen. Daraufhin kann dann die endgültige Montage erfolgen.

Nach einer weiteren Ausführungsform der Erfindung ist das erste und/oder das zweite Rastelement einstückig mit dem Schiebetürmodul ausgebildet. Dies hat den Vorteil, dass die besagten Rastelemente zum Beispiel in einem Spritzgussverfahren zusammen mit dem Türmodul kostengünstig hergestellt werden können. In einer weiteren Ausführungsform der Erfindung sind entsprechende Gegenstücke zu den Rastelementen, wie zum Beispiel Rastnasen der Schlossmodule, mit den Schlossmodulen auch hier vorzugsweise einstückig ausgebildet.

Erfindungsgemäß ist die dritte Betätigungsstange durch eine erste und eine zweite Schiene ausgebildet und weist ferner ein Verbindungselement zur Verbindung der beiden Schienen miteinander auf. Bei dem Verbindungselement kann es sich dabei um ein Scharnier oder ein Filmscharnier handeln. Damit ist es möglich, dass die eine Schiene mit einem der Schlossmodule in Verbindung steht, währenddessen die andere Schiene mit einem der Betätigungselemente in Verbindung steht. Bei Bewegung des Schlossmoduls können sich nun aufgrund des Vorhandenseins des Scharniers die beiden Schienen so ausrichten und strecken, dass in der Montageposition des Schlossmoduls eine hinreichend stabile Verbindung in Form einer Betätigungsstange zwischen dem Betätigungselement und dem Schlossmodul besteht. Um die Stabilität weiter zu erhöhen, weist die Betätigungsstange vorzugsweise das Verbindungselement und Mittel zum Verrasten der ersten und zweiten Schiene in der Funktionsposition des Schlossmoduls auf. Dies hat den Vorteil, dass die Betätigungsstange in der Funktionsposition des Schlossmoduls so starr ausgelegt ist, dass sie sowohl auf Zug als auch auf Druck ohne weiteres stärkeres Nachgeben belastbar ist.

Alternativ zur Verwendung eines Scharniers oder eines Filmscharniers bietet es sich auch an, die erste und die zweite Schiene jeweils mit Kunststoffverzahnungen auszustatten, sodass die beiden Schienen aufgrund der ineinandergreifenden Kunststoffverzahnungen stufenlos gegeneinander verschiebbar sind. Solches hat in Verbindung mit den verschiebbaren Schlossmodulen den Vorteil, dass in jeder beliebigen relativen Position der Schlossmodule gegenüber dem Türmodul eine hinreichend starre Ausbildung der Kunststoff-Betätigungsstange gegeben ist. Diese starre Kunststoff-Betätigungsstange ist somit sowohl auf Druck als auch auf Zug belastbar.

Nach einer Ausführungsform der Erfindung weisen die Betätigungsstangen eine oder mehrere Verstärkungsrippen auf, wobei die eine oder die mehren Verstärkungsrippen an einem Radius der Betätigungsstange angeordnet sind. Beispielsweise befinden sich ein oder mehrere Verstärkungsrippen an einer Krümmung der Betätigungsstange, um im Bereich der Krümmung die zur Übertragung eines Moments erforderliche Stabilität zu erreichen.

Nach einer weiteren Ausführungsform der Erfindung weist die Betätigungsstange in ihrem Längsverlauf einen variablen Querschnitt auf. Abschnittsweise kann der Querschnitt beispielsweise T-Profil-förmig, rechteckförmig oder dreieckförmig sein oder eine andere geometrische Form aufweisen.

Nach einer weiteren Ausführungsform der Erfindung besteht die Betätigungsstange abschnittsweise aus verschiedenen Kunststoffen. Dies kann beispielsweise dazu dienen, um in gewissen Abschnitten, in welchen eine erhöhte Reibung der Betätigungsstange mit umgebenden Elementen des Türmoduls bzw. der Kraftfahrzeugtür gegeben ist, die besagte Reibung durch eine geeignete Kunststoffmaterialwahl zu reduzieren.

Nach einer Ausführungsform der Erfindung ist das erste Schlossmodul durch eine erste translatorische Bewegung in die erste Funktionsposition überführbar und/oder durch eine erste Drehbewegung um eine erste Schwenkachse in die erste Funktionsposition überführbar. Nach einer weiteren Ausführungsform der Erfindung ist alternativ oder zusätzlich dazu das zweite Schlossmodul durch eine zweite translatorische Bewegung in die zweite Funktionsposition überführbar, und/oder durch eine zweite Drehbewegung um eine zweite Schwenkachse in die zweite Funktionsposition überführbar. Dabei verläuft die erste und/oder zweite Schwenkachse im Wesentlichen in Y-Richtung des Kraftfahrzeugs. Bezüglich der translatorischen Bewegung ist vorzugsweise das stangenförmige Rastelement zur Führung der translatorischen Bewegung ausgebildet. In beiden Fällen ist gewährleistet, dass durch eine einfache Bewegung das erste oder zweite Schlossmodul von der Montageposition in die Funktionsposition überführbar ist, wobei das jeweilige Schlossmodul in der Montageposition nicht über den äußeren Rand des Türmoduls hinausragt.

Nach einer weiteren Ausführungsform der Erfindung sind durch die erste oder zweite translatorische Bewegung das erste Schlossmodul und das zweite Schlossmodul gemeinsam in die jeweilige Funktionsposition überführbar. Die hat den Vorteil, dass in lediglich einem einzigen Arbeitsschritt nach Aufsetzen des Schiebetürmoduls auf die dafür vorgesehene Öffnung der Kraftfahrzeugtür beide Schlossmodule von der Montageposition in die Funktionsposition überführbar sind.

Nach einer weiteren Ausführungsform der Erfindung weist das erste Schlossmodul ein erstes Mittel zur Aufnahme eines Zughakens auf, wobei das Mittel zur Aufnahme des Zughakens zur Überführung des ersten Schlossmoduls von der ersten Montageposition in die erste Funktionsposition durch den Zughaken vorgesehen ist. Alternativ oder zusätzlich dazu weist das zweite Schlossmodul ein zweites Mittel zur Aufnahme eines Zughakens auf, wobei das zweite Mittel zur Aufnahme des Zughakens zur Überführung des zweiten Schlossmoduls von der zweiten Montageposition in die zweite Funktionsposition durch den Zughaken vorgesehen ist. Bei dem ersten und zweiten Mittel zur Aufnahme des Zughakens handelt es sich dabei vorzugsweise um die Drehfalle des ersten bzw. zweiten Schlossmoduls.

Damit können in einfacher Weise durch Einhaken des Zughakens in die Drehfalle der jeweiligen Schlossmodule die Schlossmodule von der Montageposition in die Funktionsposition an die Stirnseiten der Kraftfahrzeugtüre herangezogen werden, um dort durch entsprechende Befestigungsmittel endgültig an der Kraftfahrzeugtür fixiert zu werden. Wie bereits oben angemerkt, ist es dabei in einer bevorzugten Ausführungsform hilfreich, wenn das erste Schlossmodul und das zweite Schlossmodul gemeinsam durch eine einzige Zugbewegung von einem der Zughaken in die jeweiligen Funktionspositionen überführbar sind.

In einem weiteren Aspekt betrifft die Erfindung eine Schiebetür eines Kraftfahrzeugs mit einem erfindungsgemäßen Schiebetürmodul.

In einem weiteren Aspekt betrifft die Erfindung ein Verfahren zur Montage eines Schiebetürmoduls für eine Schiebetür eines Kraftfahrzeugs mit einem ersten Schlossmodul, wobei das erste Schlossmodul in einer ersten Montageposition nicht über einen ersten äußeren Rand des Schiebetürmoduls hinausragt, wobei das erste Schlossmodul zur Überführung in eine ersten Funktionsposition ausgebildet ist, wobei das erste Schlossmodul in der ersten Funktionsposition über den ersten Rand des Schiebetürmoduls hinausragt.

Ferner umfasst das Schiebetürmodul ein zweites Schlossmodul, wobei das zweite Schlossmodul in einer zweiten Montageposition nicht über einen zweiten äußeren Rand des Schiebetürmoduls hinausragt, wobei das zweite Schlossmodul zur Überführung in eine zweite Funktionsposition ausgebildet ist, wobei das erste Schlossmodul in der zweiten Funktionsposition über den ersten Rand des Schiebetürmoduls hinausragt, wobei der erste äußere Rand vom zweiten äußeren Rand räumlich beabstandet ist. Ferner umfasst das Schiebetürmodul zumindest eine erste Betätigungsstange zur Übertragung einer Betätigungskraft von dem ersten Schlossmodul zu dem zweiten Schlossmodul, wobei die erste Betätigungsstange aus Kunststoff besteht. Das Verfahren zur Montage dieses Schiebetürmoduls umfasst dabei den ersten Schritt der Positionierung des Schiebetürmoduls in einer Aufnahmevorrichtung der Schiebetür, wobei sich das erste und das zweite Schlossmodul in ihren jeweiligen Montagepositionen befinden. In einem weiteren Schritt erfolgt das Überführen des ersten Schlossmoduls von der ersten Montageposition in die erste Funktionsposition und schließlich das Überführen des zweiten Schlossmoduls von der zweiten Montageposition in die zweite Funktionsposition.

Das erfindungsgemäße Verfahren zur Montage hat dabei den Vorteil, dass eine einfache Montage der Schlossmodule an der Kraftfahrzeugtür unter Verwendung des Schiebetürmoduls, auf welchem die Schlossmodule vormontiert sind, möglich ist, ohne dabei aufwendige Einfädelbewegungen der Schlossmodule in die Aufnahmevorrichtungen oder Öffnungen der Fahrzeugtür vornehmen zu müssen. Ferner kann durch eine geeignete Gestaltung der Kunststoff-Betätigungsstange auf weitere Arbeitsschritte verzichtet werden, wie sie nach dem Stand der Technik notwendig sind. Beispielsweise erfordert nach dem Stand der Technik das Verschieben der Schlossmodule von der Montageposition in die Funktionsposition, dass anschließen ein Einfädeln oder Einhängen der Betätigungsstange in entsprechende Aufnahmen in die Schlossmodule und gegebenenfalls auch entsprechender Betätigungselemente erfolgt. Dieser zusätzliche Arbeitsschritt kann nun durch die Verwendung von zum Beispiel ausfahrbaren oder abwinkelbaren Betätigungsstangen umgangen werden, da sich diese automatisch bei Überführung des Schlossmoduls von der Montageposition in die Funktionsposition den neuen geometrischen Gegebenheiten anpassen. Dies ist insbesondere auch vor dem Hintergrund relevant, dass selbstverständlich vor Einsetzen des Schiebetürmoduls in die Aufnahmevorrichtung oder Öffnung der Fahrzeugtür ein Anbringen von Betätigungsstangen an Schlossmodule wesentlich einfacher handhabbar ist, da sämtliche Baugruppen zu diesem Zeitpunkt wesentlich einfacher zugänglich sind, als zu dem Zeitpunkt, wenn sich das Schiebetürmodul bereits in der Öffnung der Kraftfahrzeugtür befindet.

Nach einer Ausführungsform der Erfindung weist das erste Schlossmodul ein erstes Mittel zur Aufnahme eines Zughakens auf und/oder das zweite Schlossmodul ein zweites Mittel zur Aufnahme eines solchen Zughakens auf, wobei die Überführung des ersten und zweiten Schlossmoduls von der jeweiligen Montageposition in die jeweilige Funktionsposition ferner die Schritte umfasst des Einsetzens des Zughakens in die ersten Mittel zur Aufnahme des Zughakens und den Schritt der Überführung des ersten Schlossmoduls von der ersten Montageposition in die erste Funktionsposition durch eine Zugbewegung mit dem Zughaken. Ferner umfasst das Verfahren den Schritt des Einsetzens des Zughakens in die zweiten Mittel zur Aufnahme des Zughakens und die Überführung des zweiten Schlossmoduls von der zweiten Montageposition in die zweite Funktionsposition durch eine Zugbewegung mit dem Zughaken. Es sei jedoch darauf hingewiesen, dass das erneute Einsetzen des Zughakens in die zweiten Mittel und die Überführung des zweiten Schlossmoduls von der zweiten Montageposition in die zweite Funktionsposition durch die Zugbewegung mit dem Zughaken entfällt, wenn das erste und zweite Schlossmodul so miteinander gekoppelt sind, dass durch eine Überführung des ersten Schlossmoduls auch gleichzeitig das zweite Schlossmodul in seine Funktionsposition automatisch überführt wird.

Der Zughaken ist im Allgemeinen wiederverwendbar, da er zum Beispiel durch eine einfache Drehbewegung aus der Drehfalle des Schlossmoduls ausgedreht und entfernt werden kann, nachdem das Schlossmodul oder die Schlossmodule von der Montageposition in die Funktionsposition durch die Zugbewegung überführt wurden.

Im Weiteren werden Ausführungsformen der Erfindung anhand der Zeichnungen näher erläutert. Es zeigen:
- Figur 1:: eine schematische Ansicht eines erfindungsgemäßen Schiebetürmoduls und eine Schiebetür eines Kraftfahrzeugs,
- Figur 2:: eine schematische Ansicht einer Raststange,
- Figur 3:: eine schematische Ansicht einer Betätigungsstange mit Rastelementen,
- Figur 4:: eine schematische Ansicht einer Betätigungsstange mit einer Schwenkverbindung,
- Figur 5:: eine schematische Ansicht einer Ausführungsform einer Betätigungsstange,
- Figur 6:: eine Ausführungsform einer Betätigungsstange mit einem Betätigungsknopf,
- Figur 7:: ein Flussdiagramm eines erfindungsgemäßen Verfahrens zur Montage eines Schiebetürmoduls an einer Schiebetür eines Kraftfahrzeugs.

Im Folgenden sind einander ähnliche Elemente mit gleichen Bezugszeichen gekennzeichnet.

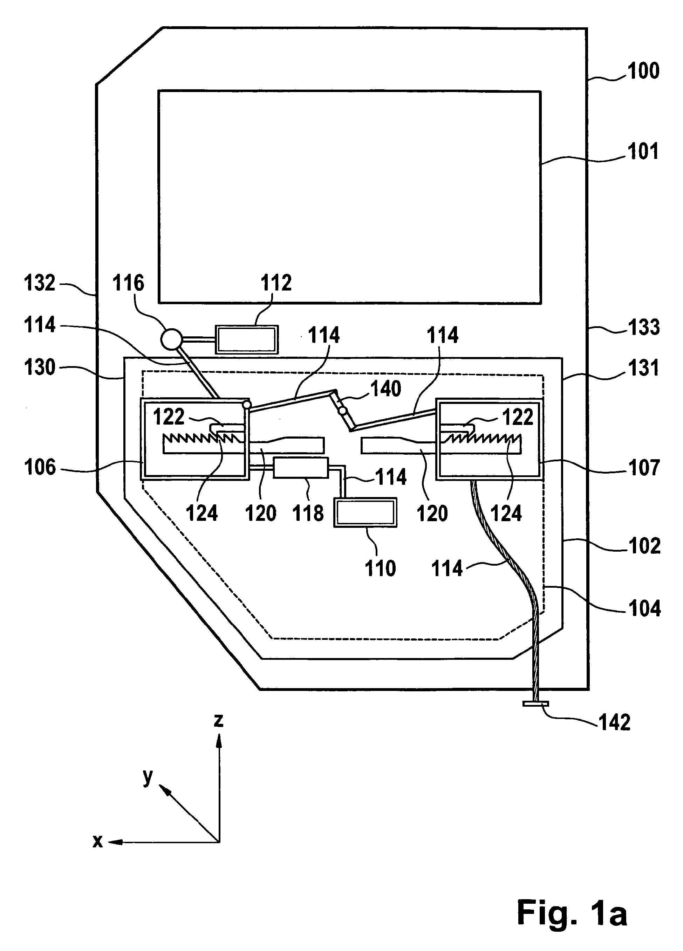

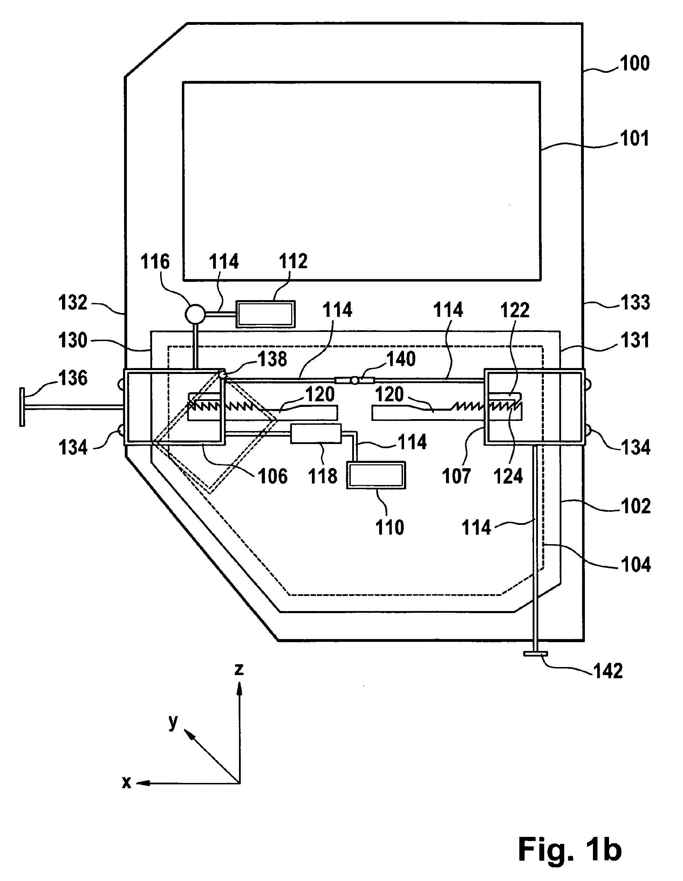

Die Figur 1 zeigt eine schematische Ansicht eines erfindungsgemäßen Schiebetürmoduls 102 und einer Kraftfahrzeug-Schiebetür 100. Die Kraftfahrzeug-Schiebetür 100 weist dabei sowohl eine Fensterscheibenöffnung 101 auf, als auch eine Aufnahmevorrichtung in Form einer Öffnung 104 auf, auf welche das Schiebetürmodul 102 zur Montage des Schiebetürmoduls an der Kraftfahrzeugtür aufgesetzt wird. In diesem Zustand befinden sich die beiden Schlossmodule 106 und 107, welche am Schiebetürmodul 102 vormontiert sind, in einer Montageposition, sodass diese in der Montageposition nicht über den Rand 130 bzw. 131 des Türmoduls 102 hinausragen.

Ferner umfasst das Türmodul 102 neben hier nicht dargestellten Elementen, wie zum Beispiel einem Fensterheber, Lautsprechern, elektrischen Elementen, usw. eine Türschloss-Innenbetätigung 110 und eine Türschloss-Außenbetätigung 112. Sowohl die Türschloss-Innenbetätigung 110 und die Türschloss-Außenbetätigung 112 sind jeweils über Betätigungsstangen 114 mit den Schlossmodulen 106 bzw. 107 verbunden.

Dabei weisen die Betätigungsstangen 114 verschiedene Elemente auf, die es ermöglichen, sich bei einer Verschiebung der Schlossmodule 106 und 107 in x-Richtung der Kraftfahrzeugtür 100 den neuen geometrischen Gegebenheiten anzupassen. Beispielsweise weist die Betätigungsstange 114, welche die Türschloss-Innenbetätigung 110 und das Schlossmodul 106 miteinander verbindet, ein Verbindungselement 118 auf. Dieses Verbindungselement 118 ist dabei so ausgebildet, dass eine variable Längenänderung der Betätigungsstange in x-Richtung möglich ist. Solch ein Verbindungselement 118 kann zum Beispiel durch zwei ineinandergreifende Kunststoffzahnungen ausgebildet sein, die beim räumlichen Separieren des Schlossmoduls 106 von der Türschloss-Innenbetätigung 110 eine Verlängerung der Betätigungsstange 114 in x-Richtung ermöglichen.

Alternativ oder zusätzlich dazu ist für die Betätigungsstange 114 zwischen der Türschloss-Außenbetätigung 112 und dem Schlossmodul 106 ein Scharnier vorgesehen. Dabei sind das Scharnier 116 und die zugehörige Betätigungsstange 114 so ausgebildet, dass nach einer translatorischen Bewegung des Schlossmoduls 106 in x-Richtung weiterhin eine starre Verbindung zwischen der Türschloss-Außenbetätigung 112 und dem Schlossmodul 106 gewährleistet ist. In diesem Fall folgt der untere Teil der Betätigungsstange 114, welcher am Schlossmodul 106 beweglich angeordnet ist, der translatorischen Bewegung des Schlossmoduls 106.

Die Figur 1a zeigt nun die räumliche Position der Schlossmodule 106 und 107 in ihrer Montageposition. In ihrer Montageposition sind diese Schlossmodule in Bezug auf das Türmodul 102 so angeordnet, dass die Schlossmodule 106 und 107 nicht über die Ränder des Türmoduls 102 hinausragen. Im Gegensatz dazu zeigt die Figur 1 b die entsprechende Position der Schlossmodule 106 und 107 in ihrer Funktionsposition, in welcher die Schlossmodule 106 und 107 bündig mit den Stirnseiten 132 und 133 der Kraftfahrzeugtür 100 abschließen.

Um nun zum einen eine saubere Überführung zum Beispiel des Schlossmoduls 106 von seiner in der Figur 1a gezeigten Montageposition in seine in der Figur 1 b gezeigten Funktionsposition zu ermöglichen, ist das Rastelement 120 vorgesehen. Dasselbe gilt auch für die Überführung des Schlossmoduls 107 von der Montageposition in die Funktionsposition. Das bzw. die Rastelemente 120 sind stangenförmig ausgebildet und weisen eine Vielzahl von Verzahnungen 124 auf. Das Rastelement 120 ist vorzugsweise einstückig mit dem Türmodul 102 ausgebildet. Als Gegenstück zum Rastelement 120 befindet sich am Schlossmodul 106 bzw. 107 eine Rastnase 122. Diese Rastnase greift dabei in die entsprechende gegenstückige Verzahnungen 124 des Rastelements ein. Dies führt dazu, dass in der in Figur 1 a gezeigten Montageposition das Schlossmodul 106 bzw. 107 weitgehend mechanisch stabil in deren besagten Montagepositionen fixiert sind.

Durch zum Beispiel Einsetzen eines Zughakens 136 in die Drehfalle des Schlossmoduls 106 kann nun durch eine translatorische Bewegung in x-Richtung das Schlossmodul 106 in seine in der Figur 1 b gezeigten Funktionsposition gezogen werden. Dabei rastet nacheinander die Rastnase 122 in die verschiedenen Verzahnungen 124 des Rastelements 120 ein. In jeder dieser Rastpositionen ergibt sich dabei eine hinreichend stabile Fixierung des Schlossmoduls 106 in seiner jeweiligen geometrischen Lage in Bezug auf das Türmodul 102. So kann beispielsweise im Fall dessen, dass die Stirnseite 132 einer anderen Kraftfahrzeugtüre näher am Rand 130 des Schiebetürmoduls 102 liegt, das Schlossmodul 106 so in Bezug auf die andere Stirnseite 132 der anderen Fahrzeugtüre 100 am Schiebetürmodul 102 fixiert werden, dass zum Beispiel die Rastnase 122 nicht wie in der Figur 1 b gezeigt in der letzten gegenstückigen Verzahnung 124 einrastet, sondern beispielsweise nur in der vorletzten Verzahnung.

Eine weitere Möglichkeit zur Überführung des Schlossmoduls 106 von seiner Montageposition in die Funktionsposition ist die Schwenkung des Schlossmoduls 106 um eine Schwenkachse 138, welche im Wesentlichen in y-Richtung der Kraftfahrzeugtüre 100 verläuft. Die Montageposition ist dabei hilfsweise in der Figur 1 b gestrichelt angedeutet. Durch ein entsprechendes Einsetzen des Zughakens in eine gegenstückige Aufnahmevorrichtung des Schlossmoduls 106 kann nun durch eine Zugbewegung, zum Beispiel in x-z-Richtung das Schlossmodul 106 von seiner verkippten Montageposition in die waagrechte Funktionsposition überführt werden.

Die oben beschriebenen Schritte mit dem Einsetzen des Zughakens 136 in die Drehfalle eines Schlossmoduls usw. könnten nun auch analog für das Schlossmodul 107 durchgeführt werden. Jedoch bietet es sich vorzugsweise an, dass eine ohnehin im Betrieb der Schlossanordnung notwendige Kopplung zwischen dem Schlossmodul 106 und dem Schlossmodul 107 dazu verwendet wird, dass bei einer Überführung des Schlossmoduls 106 von der Montage- in die Funktionsposition auch gleichzeitig eine Überführung des Schlossmoduls 107 von der Montage- in die Funktionsposition stattfindet. Dies ist im vorliegenden Beispiel der Figur 1 so realisiert, dass das Schlossmodul 106 und das Schlossmodul 107 durch eine Kunststoffstange 114 miteinander verbunden sind. Ferner sind die Schlossmodule 106 und 107 durch einen Hebel 140 miteinander verbunden, welcher um eine Schwenkachse in y-Richtung schwenkbar ist. Damit wird durch Ziehen des Schlossmoduls 106 von der Montage- in die Funktionsposition am oberen Ende des Hebels 140 gezogen, sodass dieser um die Schwenkachse in y-Richtung schwenkt und damit mit seinem unteren Ende die Betätigungsstange in Richtung des Schlossmoduls 107 drückt. Durch dieses Drücken der Betätigungsstange in Richtung des Schlossmoduls 107 wird dieses ebenfalls von seiner Montage- in seine Funktionsposition überführt. Dabei ist vorzugsweise der Hebel so ausgebildet, dass auch hier in Verbindung mit einer verwendeten Schwenkachse Kunststoffrastelemente verwendet werden, sodass in der in Figur 1 b gezeigten Position eine endgültige nahezu geradlinige steife Verbindung zwischen den Betätigungsstangen 114, welche zum Schlossmodul 106 bzw. 107 verlaufen, und dem Hebel 140 gegeben ist. Damit ist gewährleistet, dass bei Betätigung der Schlossmodule 106 bzw. 107 eine auf die Betätigungsstange und den Hebel 140 wirkende Zugkraft oder Druckkraft nicht zu einem erneuten Zurückklappen des Hebels 140 führt.

Es sei noch darauf hingewiesen, dass es in einer weiteren Alternative statt der Verwendung eines Zughakens möglich ist, durch eine Drehung des Hebels um die y-Achse eine Verschiebung der Schlossmodule 106 und 107 zu bewirken: In diesem Fall wird z.B. ein Innensechskantschlüssel in die y-Achse des Hebels 140 eingesetzt und durch eine Drehbewegung des Innensechskantschlüssels im Gegenuhrzeigersinn damit der Hebel 140 so gedreht, dass die Schlossmodule 106 und 107 über die jeweils am Hebelende befindlichen Stangen 114 voneinander weggedrückt werden.

Entweder nach der rein translatorischen Bewegung in x-Richtung, wie oben beschrieben, oder nach der Bewegung in x-z-Richtung zur Überführung des Schlossmoduls 106 bzw. 107 in seine Funktionsposition, kann nun das Schlossmodul 106 und das Schlossmodul 107 jeweils an deren Stirnseiten 132 und 133 der Kraftfahrzeugtür 100 mit entsprechenden Befestigungsmitteln 134 fixiert werden. Anschließend kann im Falle der Verwendung eines Rasthakens der Rasthaken 136 von dem Schlossmodul 106, bzw. falls notwendig auch von dem Schlossmodul 107 (wenn dieses nicht zusammen mit dem Schlossmodul 106 in seine Funktionsposition überführt wird), entfernt werden, sodass der Rasthaken 136 für einen weiteren Montageschritt an einer weiteren Kraftfahrzeugtür verwendet werden kann. Dasselbe gilt natürlich auch für die Entfernung des Innensechskantschlüssels.

Außerdem in der Figur 1 gezeigt ist ein Türfeststeller 142, welcher ebenfalls über eine Betätigungsstange 114 mit dem Schlossmodul 107 verbunden ist. Auch hier erweist es sich als äußerst vorteilhaft, dass die Betätigungsstange 114 aus Kunststoff ausgebildet ist, sodass entsprechende Verbindungselemente verwendet werden können, sodass bei der translatorischen oder Drehbewegung des Schlossmoduls 107 von der Montage- in die Funktionsposition kein Abknicken der Betätigungsstange 114 erfolgt. Alternativ dazu kann durch eine geeignete Kunststoffwahl die Betätigungsstange 114 so biegeelastisch ausgebildet werden, dass aufgrund des relativ zur Schiebetür fixierten Feststellers 142 in der Montageposition die Betätigungsstange leicht gebogen ist, wobei nach Überführung in die Funktionsposition diese Biegung aufgehoben ist und die Betätigungsstange im Wesentlichen geradlinig senkrecht von dem Schlossmodul 107 zum Feststeller 142 verläuft. Diese gebogene Form der Betätigungsstange 114 ist in der Figur 1 a angedeutet. Es sei jedoch darauf hingewiesen, dass aufgrund der Riskierung von Materialermüdung eine solch gebogene Form vorzugsweise vermieden wird und auch hier entsprechende Scharnierelemente oder Ähnliches verwendet werden sollte.

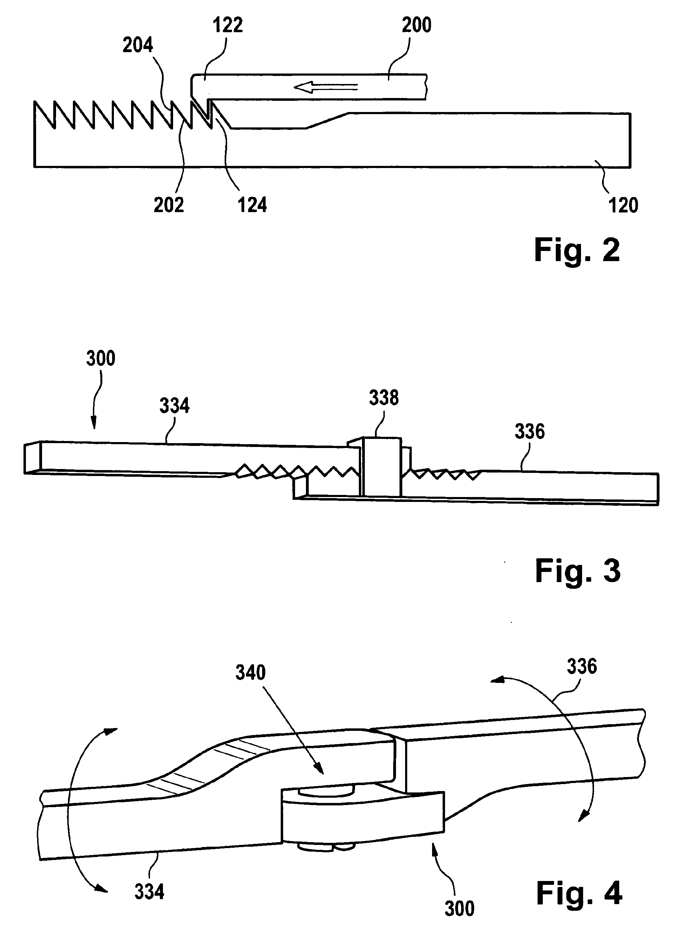

Zu weiteren Illustrationszwecken zeigt Fig. 2 eine vergrößerte schematische Ansicht einer Raststange, wie sie zur provisorischen Fixierung des Schlossmoduls 106 mit Bezug auf das Türmodul 102 gegeben ist. Die Raststange (stangenförmiges Rastelement) weist eine Vielzahl von Verzahnungen 124 auf, in welche eine Rastnase 122, welche am Schlossmodul 106 fixiert ist, einrasten kann. Durch Bewegung des an der Rastnase 122 fixierten Schlossmoduls in die Richtung 200 (X-Richtung des Kraftfahrzeugs) rastet nun die Rastnase 122 nacheinander in die verschiedenen Verzahnungen der Raststange (bzw. des Rastelements) 120 ein. In jeder der entsprechenden Raststellungen ist dabei eine hinreichend stabile Positionierung des an der Rastnase 122 fixierten Schlossmoduls 106 in Bezug auf das Türmodul 102 bzw. damit auch in Bezug auf das Rastelement 120 gewährleistet.

Durch die in der Fig. 2 gezeigte geometrische Ausgestaltung der Verzahnung 124 ist gewährleistet, dass nach der Überführung der Rastnase 122 in ein weiteres Element der Verzahnung 124 ein "Zurückschnappen" der Rastnase 122 in ein voriges Element der Verzahnung 124 verhindert wird. Aus diesem Grund ist die geometrische Struktur der Verzahnung 124 so ausgebildet, dass sie in Richtung 200 leicht ansteigt, sodass die gegenstückige Rastnase bei Verschiebung in Richtung 200 leicht entlang der ansteigenden Verzahnung gleiten kann. Nach diesem Anstieg 202 erfolgt für jede der Verzahnungen 124 ein abrupter nahezu senkrechter Abfall 204, sodass eine Rückwärtsbewegung der Rastnase 122 entgegengesetzt der Richtung 200 effektiv vermieden wird.

Die Fig. 3 zeigt eine schematische Ansicht einer Betätigungsstange 300 mit Rastelementen. Bei der Betätigungsstange 300 handelt es sich dabei beispielsweise um eine Betätigungsstange mit integriertem Verbindungselement 118, wie in den Fig. 1a und 1 b gezeigt. Die Betätigungsstange 300 weist eine erste Schiene 334 und eine zweite Schiene 336 auf. Beide Schienen 334 und 336 haben zahnförmige Elemente, welche ineinandergreifen. Durch ein Halteelement 338 sind die beiden Schienen 334, 336 aneinander gepresst, sodass aufgrund der jeweils gegenseitig ineinandergreifenden Verzahnungen eine hinreichend hohe mechanische Stabilität gegenüber einem Auseinanderziehen und damit gegenseitigem voneinander Entfernen der Schienen 334, 336 gewährleistet ist. Allerdings ist das Halteelement 338 so ausgebildet, dass es mit einem vorgegebenen hinreichend hohen Kraftaufwand möglich ist, die erste und die zweite Schiene 334, 336 so zu verschieben, dass jeweils die ineinandergreifenden Verzahnungen um einen Zahn übersprungen werden. Dies ist z. B. dann notwendig, wie in den Fig. 1a und 1 b gezeigt, wenn zur Bewegung des Schlossmoduls 106 von seiner Montage- in seine Funktionsposition eine Verlängerung der entsprechenden Betätigungsstangen 114 mittels des Verbindungselements 118 erzielt werden soll.

In einer weiteren Ausführungsform der Fig. 3 ist es auch möglich, bei der Montage der Betätigungsstange 300 zunächst auf das Halteelement 338 zu verzichten. So werden in der gewünschten relativen Position der ersten und zweiten Schiene 334, 336 die beiden Schienen übereinander mit ihren Verzahnungen positioniert. In der gewünschten Position wird daraufhin das Halteelement 338 z. B. in Form eines Filmscharniers um die erste und zweite Schiene herum angeordnet und geschlossen, um die beiden Schienen 334, 336 gegeneinander zu pressen und so aufgrund der Verzahnungen aneinander zu fixieren. Das Filmscharnier 338 kann dabei als integraler Bestandteil der Schiene 334 und/oder 336 ausgebildet sein. Beispielsweise kann das Filmscharnier 338 in einem Arbeitsgang mittels Kunststoff-Spritzguss zusammen mit den Teilen 334 und 336 hergestellt werden.

Die Fig. 4 zeigt eine weitere schematische Ansicht einer Betätigungsstange mit einer Schwenkverbindung. Bei dieser Ausführungsform sind die erste und zweite Schiene 334 und 336 der Betätigungsstange mit einem Scharnier 340 z. B. in Form eines Rundclips verbunden, welcher ein Verschwenken der Teile 334 und 336 relativ zueinander ermöglicht. An dem Rundclip 340 kann eine Rastnase oder können auch mehrere Rastnasen angeordnet sein, um die beiden Teile 334, 336 in einer gewünschten Winkelstellung miteinander zu verrasten.

Die Verwendung eines Scharniers wie in der Fig. 4 gezeigt, hat auch den Vorteil, dass z. B. im Falle eines Seitenaufpralls auf eine Kraftfahrzeugtür mit einer in der Fig. 4 gezeigten Betätigungsstange 300 ein Verletzungsrisiko von Insassen eines Kraftfahrzeugs dadurch reduziert werden kann, dass aufgrund des Vorhandenseins des Scharniers 340 die Teile 334, 336 wegschwenken können, anstatt aufgrund einer starken starren Verbindung zu zersplittern.

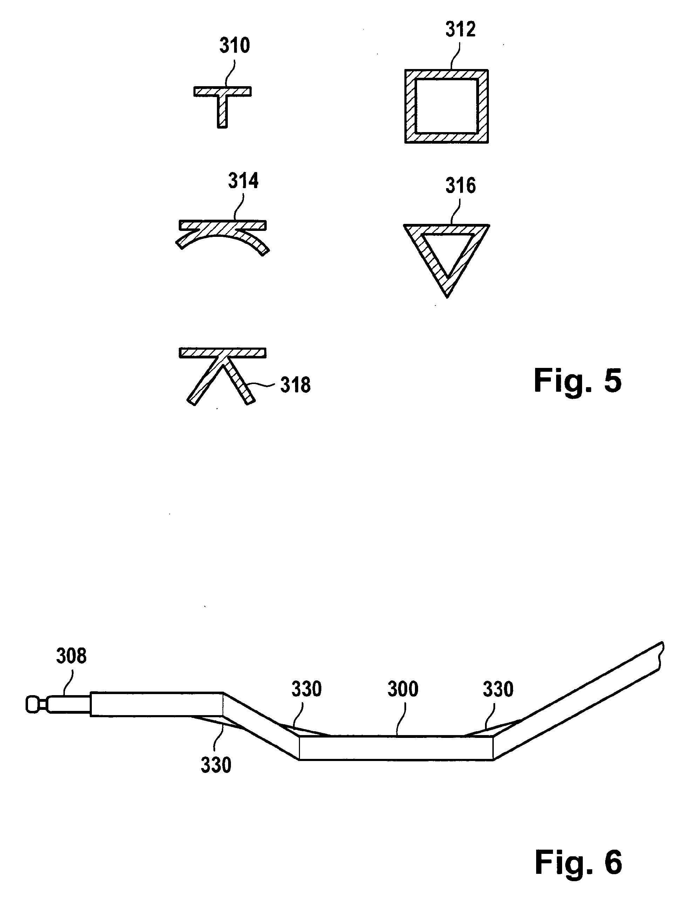

Die Fig. 5 zeigt eine schematische Ansicht einer Ausführungsform einer Betätigungsstange. Dabei sind in der Fig. 5 verschiedene Querschnitte 310, 312, 314, 316 und 318 einer solchen Betätigungsstange gezeigt. Eine Ausführungsform einer erfindungsgemäßen Betätigungsstange kann in ihrem Verlauf einen oder mehrere Querschnitte 310 bis 318 annehmen. Die ortsabhängige Wahl des Querschnitts der Betätigungsstange hängt von den jeweiligen lokalen Kräften, Momenten und Funktionsanforderungen ab. Eine Realisierung der Betätigungsstange durch Kunststoff-Spritzguss ist hierbei besonders vorteilhaft, da sich der Querschnittsverlauf im Prinzip beliebig wählen lässt.

Die Fig. 6 zeigt eine Ausführungsform einer Betätigungsstange 300 mit einem Betätigungsknopf 308. Dieser Betätigungsknopf kann dabei der Türschloss-Innensicherung 108, wie in der Fig. 1 gezeigt, entsprechen. Entscheidend in der Fig. 6 ist die Tatsache, dass die Betätigungsstange 300 mehrere aufeinander folgende Knickpunkte aufweist, an denen jeweils eine Verstärkungsrippe 330 angeordnet ist. Durch die Verstärkungsrippen 330 erhält die Betätigungsstange 300 an den Knickpunkten die erforderliche Stabilität, um die bei einer Betätigung des Betätigungsknopfes 308 wirkenden Momente und Kräfte übertragen zu können.

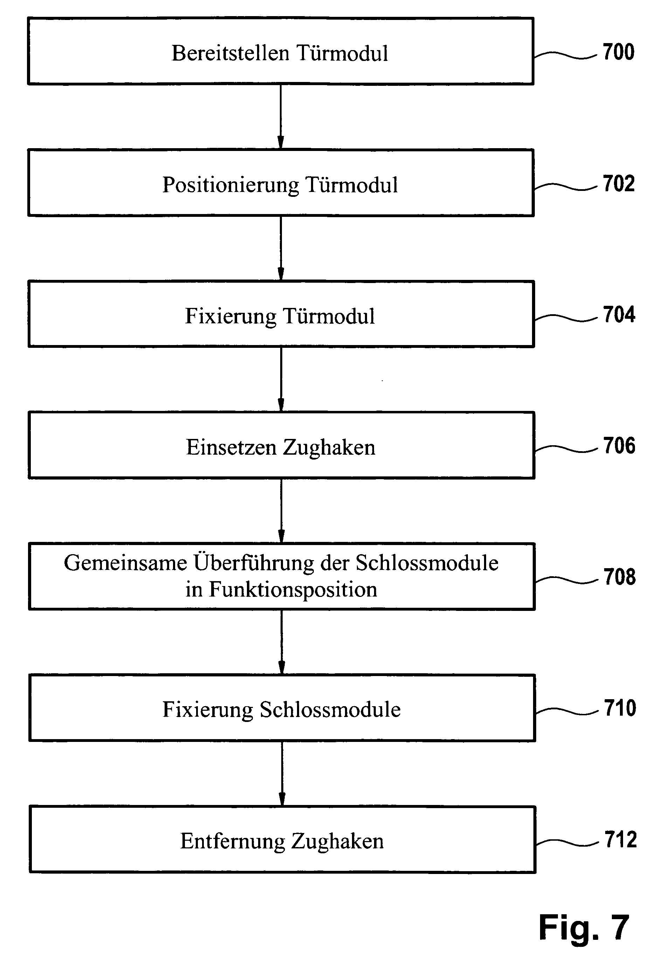

Die Figur 7 zeigt ein Flussdiagramm eines erfindungsgemäßen Verfahrens zur Montage eines Schiebetürmoduls an einer Schiebetür eines Kraftfahrzeugs. Dabei erfolgt in Schritt 700 das Bereitstellen des Schiebetürmoduls, wobei in Schritt 700 das erste und zweite Schlossmodul, welche an dem Schiebetürmodul angeordnet sind, sich in einer Montageposition befinden, in welcher diese Schlossmodule nicht über den äußeren Rand des Türmoduls hinausragen. In Schritt 702 erfolgt die Positionierung des Schiebetürmoduls in einer Aufnahmevorrichtung oder Öffnung des Türinnenblechs der Kraftfahrzeug-Schiebetür, um daraufhin in Schritt 704 an der Fahrzeugtür zumindest provisorisch befestigt zu werden. Solch eine provisorische Befestigung kann zum Beispiel in Form von Rastverbindungen, zum Beispiel Klipsen, erfolgen.

In Schritt 706 wird ein Zughaken in die Drehfalle eines der Schlossmodule eingesetzt, was es in Schritt 708 ermöglicht, durch eine Zugbewegung des Zughakens beide Schlossmodule gemeinsam aufgrund deren Kopplung aneinander von deren Montageposition in deren Funktionsposition zu überführen. Dabei ragen in der Funktionsposition beide Schlossmodule über den Rand des Türmoduls hinaus. In Schritt 710 erfolgt schließlich die Fixierung der Schlossmodule mit entsprechenden Mitteln zur Befestigung an den Stirnseiten der Kraftfahrzeugtür. Im letzten Schritt 712 erfolgt schließlich die Entfernung des Zughakens aus der Drehfalle des Schlossmoduls, was eine Wiederverwendung des Zughakens für eine weitere Montage eines weiteren Schiebetürmoduls ermöglicht.

### Bezugszeichenliste

- 100: Schiebetür eines Kraftfahrzeugs
- 101: Fensterscheibenöffnung
- 102: Schiebetürmodul
- 104: Öffnung
- 106: Schlossmodul
- 107: Schlossmodul
- 110: Türschloss-Innenbetätigung
- 112: Türschloss-Außenbetätigung
- 114: Betätigungsstange
- 116: Scharnier
- 118: Verbindungselement
- 120: Rastelement
- 122: Rastnase
- 124: Verzahnung
- 130: Erster Rand des Schiebetürmoduls
- 131: Zweiter Rand des Schiebetürmoduls
- 132: Erste Stirnseite
- 133: Zweite Stirnseite
- 134: Befestigungsmittel
- 136: Zughaken
- 138: Schwenkachse
- 140: Hebel
- 142: Feststeller

- 200: Richtung
- 202: Anstieg
- 204: Abfall

- 300: Betätigungsstange
- 308: Betätigungsknopf
- 310: Querschnitt
- 312: Querschnitt
- 314: Querschnitt
- 316: Querschnitt
- 318: Querschnitt
- 330: Verstärkungsrippe
- 334: erste Schiene
- 336: zweite Schiene
- 338: Halteelement
- 340: Scharnier

## Patentansprüche

1. Schiebetürmodul (102) für eine Schiebetür (100) eines Kraftfahrzeugs mit
- einem ersten Schlossmodul (106), wobei das erste Schlossmodul (106) in einer ersten Montageposition nicht über einen ersten äußeren Rand (130) des Schiebetürmoduls (102) hinausragt, wobei das erste Schlossmodul (106) zur Überführung in eine erste Funktionsposition ausgebildet ist, wobei das erste Schlossmodul (106) in der ersten Funktionsposition über den ersten Rand des Schiebetürmoduls (102) hinausragt,
- einem zweiten Schlossmodul (107), wobei das zweite Schlossmodul (107) in einer zweiten Montageposition nicht über einen zweiten äußeren Rand (131) des Schiebetürmoduls (102) hinausragt, wobei das zweite Schlossmodul (107) zur Überführung in eine zweite Funktionsposition ausgebildet ist, wobei das erste Schlossmodul (106) in der zweiten Funktionsposition über den ersten Rand des Schiebetürmoduls (102) hinausragt, wobei der erste äußere Rand vom zweiten äußeren Rand räumlich beabstandet ist, **dadurch gekennzeichnet, dass** das Schebetürmodul
- zumindest zwei erste Betätigungsstangen (114) zur Übertragung einer Betätigungskraft von dem ersten Schlossmodul (106) zu dem zweiten Schlossmodul (107) aufweist, wobei die beiden ersten Betätigungsstangen (114) aus Kunststoff bestehen, wobei die beiden ersten Betätigungsstangen (114) jeweils mit dem ersten (106) und zweiten (107) Schlossmodul und einem um eine Schwenkachse in y-Richtung verschwenkbaren Hebel (140) gelenkig verbunden sind,
- ferner eine dritte Betätigungsstange (300) aufweist zur Übertragung einer Betätigungskraft von dem ersten (106) oder zweiten Schlossmodul (107) zu einem Betätigungselement (110; 112), wobei es sich bei dem Betätigungselement um eine Türschloss-Außenbetätigung und/oder eine Türschloss-Innenbetätigung und/oder eine Türschloss-Innensicherung handelt, wobei die dritte Betätigungsstange (300) aus Kunststoff ausgebildet ist, wobei
die dritte Betätigungsstange (300) durch eine erste (334) und eine zweite (336) Schiene ausgebildet ist und ein Verbindungselement (338; 340) zur Verbindung der ersten und zweiten Schienen miteinander und Mittel zum Verrasten der ersten und zweiten Schiene in der Funktionsposition des ersten und/oder zweiten Schlossmoduls aufweist.

2. Schiebetürmodül (102) nach Anspruch 1, ferner mit einer Türfeststellung (142), wobei die Türfeststellung (142) im Wesentlichen senkrecht über eine zweite Betätigungsstange (114) zur Übertragung einer Betätigungskraft mit dem zweiten Schlossmodul (107) verbunden ist, wobei die zweite Betätigungsstange (114) aus Kunststoff besteht,
wobei die Türfeststellung (142) vorzugsweise an der Türunterkante der Schiebetür (100) angeordnet ist.

3. Schiebetürmodul (102) nach einem der vorigen Ansprüche, ferner mit zumindest
- einem ersten Rastelement (120), wobei das erste Rastelement zur Fixierung des ersten Schlossmoduls (106) in der ersten Montageposition und/oder in der ersten Funktionsposition ausgebildet ist und/oder
- einem zweiten Rastelement (120), wobei das zweite Rastelement zur Fixierung des zweiten Schlossmoduls (107) in der zweiten Montageposition und/oder in der zweiten Funktionsposition ausgebildet ist.

4. Schiebetürmodul (102) nach Anspruch 1, wobei es sich bei dem Verbindungselement um ein Scharnier oder ein Filmscharnier handelt.

5. Schiebetürmodul (102) nach einem der vorigen Ansprüche, wobei zumindest eine der Betätigungsstangen (114; 300) eine oder mehrere Verstärkungsrippen aufweist, wobei die eine oder mehreren Verstärkungsrippen (330) an einem Radius der Betätigungsstange (114; 300) angeordnet sind.

6. Schiebetürmodul (102) nach einem der vorigen Ansprüche, wobei zumindest eine der Betätigungsstangen (114; 300) in ihrem Längsverlauf einen variablen Querschnitt aufweist.

7. Schiebetürmodul (102) nach einem der vorigen Ansprüche, wobei zumindest eine der Betätigungsstangen (114; 300) abschnittsweise aus verschiedenen Kunststoffen besteht.

8. Schiebetürmodul (102) nach einem der vorigen Ansprüche, wobei
- das erste Schlossmodul (106) durch eine erste translatorische Bewegung in die erste Funktionsposition überführbar ist und/oder durch eine erste Drehbewegung um eine erste Schwenkachse (138) in die erste Funktionsposition überführbar ist, und/oder
- das zweite Schlossmodul (107) durch eine zweite translatorische Bewegung in die zweite Funktionsposition überführbar ist und/oder durch eine zweite Drehbewegung um eine zweite Schwenkachse in die zweite Funktionsposition überführbar ist.

9. Schiebetürmodul (102) nach Anspruch 8, wobei durch die erste oder zweite translatorische Bewegung das erste Schlossmodul (106) und das zweite Schlossmodul (107) gemeinsam in die jeweilige Funktionsposition überführbar sind.

10. Schiebetürmodul (102) nach einem der vorigen Ansprüche, wobei
- das erste Schlossmodul (106) ein erstes Mittel zur Aufnahme eines Zughakens (136) aufweist, wobei das Mittel zur Aufnahme des Zughakens zur Überführung des ersten Schlossmoduls (106) von der ersten Montageposition in die erste Funktionsposition durch den Zughaken vorgesehen ist, und/oder
- das zweite Schlossmodul (107) ein zweites Mittel zur Aufnahme eines Zughakens aufweist, wobei das zweite Mittel zur Aufnahme des Zughakens zur Überführung des zweiten Schlossmoduls (107) von der zweiten Montageposition in die zweite Funktionsposition durch den Zughaken vorgesehen ist.

11. Schiebetürmodul (102) nach Anspruch 17, wobei es sich
- bei dem ersten Mittel zur Aufnahme des Zughakens um die Drehfalle des ersten Schlossmoduls (106) handelt, und/oder
- bei dem zweiten Mittel zur Aufnahme des Zughakens um die Drehfalle des zweiten Schlossmoduls (107) handelt.

12. Schiebetür (100) eines Kraftfahrzeugs mit einem Schiebetürmodul (102) nach einem der vorigen Ansprüche 1 bis 18.

13. Verfahren zur Montage eines Schiebetürmoduls (102) für eine Schiebetür (100) eines Kraftfahrzeugs mit
- einem ersten Schlossmodul (106), wobei das erste Schlossmodul (106) in einer ersten Montageposition nicht über einen ersten äußeren Rand (130) des Schiebetürmoduls (102) hinausragt, wobei das erste Schlossmodul (106) zur Überführung in eine erste Funktionsposition ausgebildet ist, wobei das erste Schlossmodul (106) in der ersten Funktionsposition über den ersten Rand des Schiebetürmoduls (102) hinausragt,
- einem zweiten Schlossmodul (107), wobei das zweite Schlossmodul (107) in einer zweiten Montageposition nicht über einen zweiten äußeren Rand (131) des Schiebetürmoduls (102) hinausragt, wobei das zweite Schlossmodul (107) zur Überführung in eine zweite Funktionsposition ausgebildet ist, wobei das erste Schlossmodul (106) in der zweiten Funktionsposition über den ersten Rand des Schiebetürmoduls (102) hinausragt, wobei der erste äußere Rand vom zweiten äußeren Rand räumlich beabstandet ist,
- zumindest zwei ersten Betätigungsstangen (114) zur Übertragung einer Betätigungskraft von dem ersten Schlossmodul (106) zu dem zweiten Schlossmodul (107), wobei die beiden ersten Betätigungsstangen (114) aus Kunststoff bestehen, wobei die beiden ersten Betätigungsstangen (114) jeweils mit dem ersten (106) und zweiten (107) Schlossmodul und einem um eine Schwenkachse in y-Richtung verschwenkbaren Hebel (140) gelenkig verbunden sind,
- ferner mit einer dritten Betätigungsstange (300) zur Übertragung einer Betätigungskraft von dem ersten (106) oder zweiten Schlossmodul (107) zu einem Betätigungselement (110; 112), wobei es sich bei dem Betätigungselement um eine Türschloss-Außenbetätigung und/oder eine Türschloss-Innenbetätigung und/oder eine Türschloss-Innensicherung handelt, wobei die dritte Betätigungsstange (300) aus Kunststoff ausgebildet ist,
**dadurch gekennzeichnet, dass**
- die dritte Betätigungsstange (114; 300) durch eine erste (334) und eine zweite (336) Schiene ausgebildet ist und ein Verbindungselement (338; 340) zur Verbindung der ersten und zweiten Schienen miteinander und Mittel zum Verrasten der ersten und zweiten Schiene in der Funktionsposition des ersten und/oder zweiten Schlossmoduls aufweist
mit den folgenden Schritten:
- Positionierung des Schiebetürmoduls (102) in einer Aufnahmevorrichtung (104) der Schiebetür, wobei sich das erste und das zweite Schlossmodul (107) in der jeweiligen Montageposition befinden,
- Überführung des ersten Schlossmoduls (106) von der ersten Montageposition in die erste Funktionsposition,
- Überführung des zweiten Schlossmoduls (107) von der zweiten Montageposition in die zweite Funktionsposition.

14. Verfahren nach Anspruch 13, wobei das erste Schlossmodul (106) ein erstes Mittel zur Aufnahme eines Zughakens (136) aufweist und/oder das zweite Schlossmodul (107) ein zweites Mittel zur Aufnahme eines Zughakens aufweist, wobei die Überführung des ersten und zweiten Schlossmoduls (107) von der jeweiligen Montageposition in die jeweilige Funktionsposition ferner die Schritte umfasst:
- Einsetzen des Zughakens in die ersten Mittel zur Aufnahme des Zughakens,
- Überführung des ersten Schlossmoduls (106) von der ersten Montageposition in die erste Funktionsposition durch eine Zugbewegung mit dem Zughaken,
und/oder
- Einsetzen des Zughakens in die zweiten Mittel zur Aufnahme des Zughakens,
- Überführung des zweiten Schlossmoduls (107) von der zweiten Montageposition in die zweite Funktionsposition durch eine Zugbewegung mit dem Zughaken.

15. Verfahren nach Anspruch 13, wobei durch die Überführung des ersten oder zweiten Schlossmoduls das erste Schlossmodul (106) und das zweite Schlossmodul (107) gemeinsam in deren jeweilige Funktionsposition überführt werden.

## Claims

1. Sliding door module (102) for a sliding door (100) of a motor vehicle, having
- a first lock module (106), wherein, in a first installation position, the first lock module (106) does not protrude beyond a first outer edge (130) of the sliding door module (102), wherein the first lock module (106) is designed for transferring into a first functional position, wherein, in the first functional position, the first lock module (106) protrudes beyond the first edge of the sliding door module (102),
- a second lock module (107), wherein, in a second installation position, the second lock module (107) does not protrude beyond a second outer edge (131) of the sliding door module (102), wherein the second lock module (107) is designed for transferring into a second functional position, wherein, in the second functional position, the first lock module (106) protrudes beyond the first edge of the sliding door module (102), wherein the first outer edge is spatially spaced apart from the second outer edge,
**characterized in that** the sliding door module
- has at least two first actuating rods (114) form transmitting an actuating force from the first lock module (106) to the second lock module (107), wherein the two first actuating rods (114) are composed of plastic, wherein the two first actuating rods (114) are respectively connected in an articulated manner to the first lock module (106) and second lock module (107) and to a lever (140) which is pivotable about a pivot axis in the y direction,
- furthermore has a third actuating rod (300) for transmitting an actuating force from the first lock module (106) or second lock module (107) to an actuating element (110; 112), wherein the actuating element is an exterior door-lock actuating means and/or an interior door-lock actuating means and/or an interior door-lock locking means, wherein the third actuating rod (300) is composed of plastic, wherein
the third actuating rod (300) is formed by a first rail (334) and a second rail (336) and has a connecting element (338; 340) for connecting the first and second rails to each other and means for latching the first and second rail in the functional position of the first and/or second lock module.

2. Sliding door module (102) according to Claim 1, furthermore with a door-arresting means (142), wherein the door-arresting means (142) is connected to the second lock module (107) substantially perpendicularly via a second actuating rod (114) for transmitting an actuating force, wherein the second actuating rod (114) is composed of plastic,
wherein the door-arresting means (142) is preferably arranged on the lower edge of the sliding door (100).

3. Sliding door module (102) according to one of the preceding claims, furthermore with at least
- one first latching element (120), wherein the first latching element is designed for fixing the first lock module (106) in the first installation position and/or in the first functional position, and/or
- one second latching element (120), wherein the second latching element is designed for fixing the second lock module (107) in the second installation position and/or in the second functional position.

4. Sliding door module (102) according to Claim 1, wherein the connecting element is a hinge or a film hinge.

5. Sliding door module (102) according to one of the preceding claims, wherein at least one of the actuating rods (114; 300) has one or more reinforcing ribs, wherein the one or more reinforcing ribs (330) is or are arranged on a radius of the actuating rod (114; 300).

6. Sliding door module (102) according to one of the preceding claims, wherein the longitudinal profile of at least one of the actuating rods (114; 300) has a variable cross section.

7. Sliding door module (102) according to one of the preceding claims, wherein sections of at least one of the actuating rods (114; 300) are composed of different plastics.

8. Sliding door module (102) according to one of the preceding claims, wherein
- the first lock module (106) can be transferred into the first functional position by a first translational movement and/or can be transferred into the first functional position by a first rotational movement about a first pivot axis (138), and/or
- the second lock module (107) can be transferred into the second functional position by a second translational movement and/or can be transferred into the second functional position by a second rotational movement about a second pivot axis.

9. Sliding door module (102) according to Claim 8, wherein the first lock module (106) and the second lock module (107) can be transferred together into the respective functional position by the first or second translational movement.

10. Sliding door module (102) according to one of the preceding claims, wherein
- the first lock module (106) has a first means for receiving a tension hook (136), wherein the means for receiving the tension hook is provided for transferring the first lock module (106) from the first installation position into the first functional position by means of the tension hook, and/or
- the second lock module (107) has a second means for receiving a tension hook, wherein the second means for receiving the tension hook is provided for transferring the second lock module (107) from the second installation position into the second functional position by means of the tension hook.

11. Sliding door module (102) according to Claim 10, wherein
- the first means for receiving the tension hook is the rotary latch of the first lock module (106), and/or
- the second means for receiving the tension hook is the rotary latch of the second lock module (107).

12. Sliding door (100) of a motor vehicle with a sliding door module (102) according to one of the preceding claims 1 to 11.

13. Method for installing a sliding door module (102) for a sliding door (100) of a motor vehicle, with
- a first lock module (106), wherein, in a first installation position, the first lock module (106) does not protrude beyond a first outer edge (130) of the sliding door module (102), wherein the first lock module (106) is designed for transferring into a first functional position, wherein, in the first functional position, the first lock module (106) protrudes beyond the first edge of the sliding door module (102),
- a second lock module (107), wherein, in a second installation position, the second lock module (107) does not protrude beyond a second outer edge (131) of the sliding door module (102), wherein the second lock module (107) is designed for transferring into a second functional position, wherein, in the second functional position, the first lock module (106) protrudes beyond the first edge of the sliding door module (102), wherein the first outer edge is spatially spaced apart from the second outer edge,
- at least two first actuating rods (114) for transmitting an actuating force from the first lock module (106) to the second lock module (107), wherein the two first actuating rods (114) are composed of plastic, wherein the two first actuating rods (114) are respectively connected in an articulated manner to the first lock module (106) and second lock module (107) and to a lever (140) which is pivotable about a pivot axis in the y direction,
- furthermore with a third actuating rod (300) for transmitting an actuating force from the first lock module (106) or second lock module (107) to an actuating element (110; 112), wherein the actuating element is an exterior door-lock actuating means and/or an interior door-lock actuating means and/or an interior door-lock locking means, wherein the third actuating rod (300) is composed of plastic, **characterized in that**
- the third actuating rod (114; 300) is formed by a first rail (334) and a second rail (336) and has a connecting element (338; 340) for connecting the first and second rails to each other and means for latching the first and second rail in the functional position of the first and/or second lock module,
with the following steps:
- positioning the sliding door module (102) in a receiving device (104) of the sliding door, wherein the first and the second lock module (107) are in the respective installation position,
- transferring the first lock module (106) from the first installation position into the first functional position,
- transferring the second lock module (107) from the second installation position into the second functional position.

14. Method according to Claim 13, wherein the first lock module (106) has a first means for receiving a tension hook (136) and/or the second lock module (107) has a second means for receiving a tension hook, wherein the transfer of the first and second lock module (107) from the respective installation position into the respective functional position furthermore comprises the following steps:
- inserting the tension hook into the first means for receiving the tension hook,
- transferring the first lock module (106) from the first installation position into the first functional position by means of a tensioning movement with the tension hook,
and/or
- inserting the tension hook into the second means for receiving the tension hook,
- transferring the second lock module (107) from the second installation position into the second functional position by means of a tensioning movement with the tension hook.

15. Method according to Claim 13, wherein the first lock module (106) and the second lock module (107) are transferred together into the respective functional position thereof by means of the transfer of the first or second lock module.

## Revendications

1. Module de porte coulissante (102) pour une porte coulissante (100) d'un véhicule automobile, comprenant
- un premier module de serrure (106), le premier module de serrure (106) ne faisant pas saillie au-delà d'un premier bord extérieur (130) du module de porte coulissante (102) dans une première position de montage, le premier module de serrure (106) étant réalisé pour le passage à une première position fonctionnelle, le premier module de serrure (106) faisant saillie au-delà du premier bord du module de porte coulissante (102) dans la première position fonctionnelle,
- un deuxième module de serrure (107), le deuxième module de serrure (107) ne faisant pas saillie au-delà d'un deuxième bord extérieur (131) du module de porte coulissante (102) dans une deuxième position de montage, le deuxième module de serrure (107) étant réalisé pour le passage à une deuxième position fonctionnelle, le premier module de serrure (106) faisant saillie au-delà du premier bord du module de porte coulissante (102) dans la deuxième position fonctionnelle, le premier bord extérieur étant éloigné spatialement du deuxième bord extérieur, **caractérisé en ce que** le module de porte coulissante
- comprend au moins deux premières tiges d'actionnement (114) pour la transmission d'une force d'actionnement du premier module de serrure (106) au deuxième module de serrure (107), les deux premières tiges d'actionnement (114) étant constituées de matière plastique, les deux premières tiges d'actionnement (114) étant respectivement reliées de manière articulée au premier (106) et au deuxième (107) module de serrure et à un levier pivotant autour d'un axe de pivotement dans la direction y,
- comprend en outre une troisième tige d'actionnement (300) pour la transmission d'une force d'actionnement du premier (106) ou deuxième module de serrure (107) à un élément d'actionnement (110 ; 112), l'élément d'actionnement étant un dispositif d'actionnement extérieur de serrure de porte et/ou un dispositif d'actionnement intérieur de serrure de porte et/ou un dispositif de sécurité intérieur de serrure de porte, la troisième tige d'actionnement (300) étant réalisée en matière plastique, la troisième tige d'actionnement (300) étant constituée d'un premier (334) et d'un deuxième (336) rail, et comprenant un élément de liaison (338 ; 340) en vue de la liaison des premier et deuxième rails l'un à l'autre et un moyen en vue de l'encliquetage des premier et deuxième rails dans la position fonctionnelle du premier et/ou du deuxième module de serrure.

2. Module de porte coulissante (102) selon la revendication 1, comprenant en outre un dispositif d'arrêt de porte (142), le dispositif d'arrêt de porte (142) étant relié essentiellement verticalement au deuxième module de serrure (107) par l'intermédiaire d'une deuxième tige d'actionnement (114) pour la transmission d'une force d'actionnement, la deuxième tige d'actionnement (114) étant constituée de matière plastique,
le dispositif d'arrêt de porte (142) étant disposé de préférence au niveau du bord inférieur de la porte coulissante (100).

3. Module de porte coulissante (102) selon l'une quelconque des revendications précédentes, comprenant en outre au moins
- un premier élément d'encliquetage (120), le premier élément d'encliquetage étant réalisé en vue de la fixation du premier module de serrure (106) dans la première position de montage et/ou dans la première position fonctionnelle et/ou
- un deuxième élément d'encliquetage (120), le deuxième élément d'encliquetage étant réalisé en vue de la fixation du deuxième module de serrure (107) dans la deuxième position de montage et/ou dans la deuxième position fonctionnelle.

4. Module de porte coulissante (102) selon la revendication 1, dans lequel l'élément de liaison est une charnière ou une charnière film.

5. Module de porte coulissante (102) selon l'une quelconque des revendications précédentes, dans lequel au moins l'une des tiges d'actionnement (114 ; 300) comprend une ou plusieurs nervures de renforcement, et dans lequel la ou les nervures de renforcement (330) sont disposées sur un rayon de la tige d'actionnement (114 ; 300).

6. Module de porte coulissante (102) selon l'une quelconque des revendications précédentes, dans lequel au moins l'une des tiges d'actionnement (114 ; 300) présente sur son étendue longitudinale une section transversale variable.

7. Module de porte coulissante (102) selon l'une quelconque des revendications précédentes, dans lequel au moins l'une des tiges d'actionnement (114 ; 300) est constituée par sections de matières plastiques différentes.

8. Module de porte coulissante (102) selon l'une quelconque des revendications précédentes, dans lequel
- on peut faire passer le premier module de serrure (106) à la première position fonctionnelle grâce à un premier mouvement de translation et/ou on peut le faire passer à la première position fonctionnelle grâce à un premier mouvement de rotation autour d'un premier axe de pivotement (138), et/ou
- on peut faire passer le deuxième module de serrure (107) à la deuxième position fonctionnelle grâce à un deuxième mouvement de translation et/ou on peut le faire passer à la deuxième position fonctionnelle grâce à un deuxième mouvement de rotation autour d'un deuxième axe de pivotement.

9. Module de porte coulissante (102) selon la revendication 8, dans lequel on peut faire passer le premier module de serrure (106) et le deuxième module de serrure (107) conjointement à la position fonctionnelle respective grâce au premier ou deuxième mouvement de translation.

10. Module de porte coulissante (102) selon l'une quelconque des revendications précédentes, dans lequel
- le premier module de serrure (106) comprend un premier moyen de réception d'un crochet de traction (136), le moyen de réception du crochet de traction étant prévu pour le passage du premier module de serrure (106) de la première position de montage à la première position fonctionnelle grâce au crochet de traction, et/ou
- le deuxième module de serrure (107) comprend un deuxième moyen de réception d'un crochet de traction, le deuxième moyen de réception du crochet de traction étant prévu pour le passage du deuxième module de serrure (107) de la deuxième position de montage à la deuxième position fonctionnelle grâce au crochet de traction.

11. Module de porte coulissante (102) selon la revendication 10, dans lequel
- le premier moyen de réception du crochet de traction est le pêne pivotant du premier module de serrure (106), et/ou
- le deuxième moyen de réception du crochet de traction est le pêne pivotant du deuxième module de serrure (107).

12. Porte coulissante (100) d'un véhicule automobile comprenant un module de porte coulissante (102) selon l'une quelconque des revendications précédentes 1 à 11.

13. Procédé de montage d'un module de porte coulissante (102) pour une porte coulissante (100) d'un véhicule automobile comprenant
- un premier module de serrure (106), le premier module de serrure (106) ne faisant pas saillie au-delà d'un premier bord extérieur (130) du module de porte coulissante (102) dans une première position de montage, le premier module de serrure (106) étant réalisé pour le passage à une première position fonctionnelle, le premier module de serrure (106) faisant saillie au-delà du premier bord du module de porte coulissante (102) dans la première position fonctionnelle,
- un deuxième module de serrure (107), le deuxième module de serrure (107) ne faisant pas saillie au-delà d'un deuxième bord extérieur (131) du module de porte coulissante (102) dans une deuxième position de montage, le deuxième module de serrure (107) étant réalisé pour le passage à une deuxième position fonctionnelle, le premier module de serrure (106) faisant saillie au-delà du premier bord du module de porte coulissante (102) dans la deuxième position fonctionnelle, le premier bord extérieur étant éloigné spatialement du deuxième bord extérieur,
- au moins deux premières tiges d'actionnement (114) pour la transmission d'une force d'actionnement du premier module de serrure (106) au deuxième module de serrure (107), les deux premières tiges d'actionnement (114) étant constituées de matière plastique, les deux premières tiges d'actionnement (114) étant respectivement reliées de manière articulée au premier (106) et au deuxième (107) module de serrure et à un levier pivotant autour d'un axe de pivotement dans la direction y,
- en outre une troisième tige d'actionnement (300) pour la transmission d'une force d'actionnement du premier (106) ou deuxième module de serrure (107) à un élément d'actionnement (110 ; 112), l'élément d'actionnement étant un dispositif d'actionnement extérieur de serrure de porte et/ou un dispositif d'actionnement intérieur de serrure de porte et/ou un dispositif de sécurité intérieur de serrure de porte, la troisième tige d'actionnement (300) étant réalisée en matière plastique,
**caractérisé en ce que**
- la troisième tige d'actionnement (114 ; 300) est constituée d'un premier (334) et d'un deuxième (336) rail, et comprend un élément de liaison (338 ; 340) en vue de la liaison des premier et deuxième rails l'un à l'autre et un moyen en vue de l'encliquetage des premier et deuxième rails dans la position fonctionnelle du premier et/ou du deuxième module de serrure, comprenant les étapes suivantes :
- positionnement du module de porte coulissante (102) dans un dispositif de réception (104) de la porte coulissante, le premier et le deuxième module de serrure (107) se trouvant dans la position de montage respective,
- passage du premier module de serrure (106) de la première position de montage à la première position fonctionnelle,
- passage de deuxième module de serrure (107) de la deuxième position de montage à la deuxième position fonctionnelle.

14. Procédé selon la revendication 13, dans lequel le premier module de serrure (106) comprend un premier moyen de réception d'un crochet de traction (136), et/ou le deuxième module de serrure (107) comprend un deuxième moyen de réception d'un crochet de traction, dans lequel le passage du premier et du deuxième module de serrure (107) de la position de montage respective à la position fonctionnelle respective comprend en outre les étapes consistant à :
- insérer le crochet de traction dans le premier moyen de réception du crochet de traction,
- faire passer le premier module de serrure (106) de la première position de montage à la première position fonctionnelle grâce à un mouvement de traction à l'aide du crochet de traction,
et/ou
- insérer le crochet de traction dans le deuxième moyen de réception du crochet de traction,
- faire passer le deuxième module de serrure (107) de la deuxième position de montage à la deuxième position fonctionnelle grâce à un mouvement de traction à l'aide du crochet de traction.

15. Procédé selon la revendication 13, dans lequel on fait passer le premier module de serrure (106) et le deuxième module de serrure (107) conjointement à leur position fonctionnelle respective grâce au passage du premier ou du deuxième module de serrure.
